# EUROPÄISCHE PATENTSCHRIFT

(11) **EP 2 597 628 B1**
(45) Veröffentlichungstag und Bekanntmachung des Hinweises auf die Patenterteilung: **19.06.2019**
(21) Anmeldenummer: 12193859.1
(22) Anmeldetag: 22.11.2012
(51) Int. Cl.: G08B 7/06, H02G 3/08, F16B 19/00

(54) **Signalgerät zur Aussendung eines akustischen und/oder visuellen Signals**
Signal apparatus for emitting an acoustic and/or visual signal
Appareil de signalisation pour l'envoi d'un signal acoustique et/ou visuel

(30) Priorität: 22.11.2011 DE 102011055591
(43) Veröffentlichungstag der Anmeldung: 29.05.2013
(73) Patentinhaber: Pfannenberg GmbH, 21035 Hamburg (DE)
(72) Erfinder: Pfannenberg, Andreas, 21035 Hamburg (DE)
(74) Vertreter: RGTH

(56) Entgegenhaltungen:
- EP-A1- 1 643 821
- DE-U1- 9 110 236
- Iridium: "Iridium Extreme User Manual", , 6. November 2011 (2011-11-06), XP055325556, Gefunden im Internet: URL:http://satellitephonerepair.com/manual s/iridium/extrememanual.pdf [gefunden am 2016-12-02]
- sattrans: "Installing the battery on Iridium Extreme", , 9. September 2011 (2011-09-09), XP054976973, Gefunden im Internet: URL:https://www.youtube.com/watch?v=FDz-BP c4_Eg [gefunden am 2016-12-02]

## Beschreibung

Die vorliegende Erfindung betrifft ein Signalgerät zur Aussendung eines akustischen und/oder visuellen Signals, aufweisend einen Gehäusegrundkörper und einen Gehäuseoberteil, wobei der Gehäuseoberteil mittels Verbindungsmitteln mit dem Gehäusegrundkörper verbindbar ist, und wobei durch den Gehäusegrundkörper und den Gehäuseoberteil ein Aufnahmeraum gebildet ist, in dem wenigstens eine elektrische Baugruppe aufgenommen ist.

### STAND DER TECHNIK

Zur Verbindung eines Gehäuseoberteils mit einem Gehäusegrundkörper eines Signalgeräts sind gewöhnlich Schrauben bekannt, die durch eine Öffnung im Gehäuseoberteil hindurchgeführt werden und in einer Gewindebohrung im Gehäusegrundkörper eingeschraubt werden. Dadurch entsteht der Nachteil, dass die Schrauben häufig über eine Vielzahl von Gewindegängen geschraubt werden müssen, wodurch sich die Installationsdauer von Signalgeräten unerwünscht verlängert. Auch bekannt sind Gehäuseoberteile, die an einer Kante mit einem Gelenk, beispielsweise mit einem Filmgelenk, am Gehäusegrundkörper angeordnet sind, und der Gehäuseoberteil kann am Gehäusegrundkörper verschwenkt werden. Somit kann der Gehäuseoberteil von einer Öffnungsposition in eine Schließposition überführt werden, und anschließend beispielsweise mit zwei, insbesondere dem Filmgelenk gegenüberliegenden Schrauben am Gehäusegrundkörper verschraubt werden.

Signalgeräte sind zur Aussendung von akustischen und/oder visuellen Signalen bekannt, und werden auf einem Aufnahmekörper montiert, beispielsweise an einer Wand, an einer Decke oder beispielsweise an einem Gehäuse für elektronische Bauteile. Im Signalgerät ist ein Aufnahmeraum gebildet, in dem eine elektrische Baugruppe aufgenommen ist, die beispielsweise eine Elektronikplatine umfassen kann, um ein akustisches und/oder ein visuelles Signal zu erzeugen. Beispielsweise kann das Signalgerät als Sirene und/oder als Blitzlampe ausgeführt sein. Zur Kontaktierung der elektrischen Baugruppe werden Leitungen in den Gehäusegrundkörper hineingeführt und mit der elektrischen Baugruppe verbunden. Somit muss zur Installation des Signalgerätes das Gehäuse zunächst geöffnet werden, sodass das Signalgerät mit dem Gehäusegrundkörper am Aufnahmekörper installiert werden kann. Anschließend wird der Gehäuseoberteil wieder am Gehäusegrundkörper angeordnet, um einen geschlossenen Aufnahmeraum im Signalgerät zu bilden. Dabei bestehen die Verbindungsmittel zur Verbindung des Gehäuseoberteils mit dem Gehäusegrundkörper aus Schraubelementen.

Aus der DE 198 37 319 B4 ist ein Deckel-Gehäuse-Schnellverschluss bekannt, und in einem Gehäusegrundkörper sind mehrere Durchgangskanäle vorgesehen, und es ist eine Schnellverschlusshülse notwendig, die mit einer mantelseitigen Nase in eine Einlaufkurve im Durchgangskanal eingesetzt werden kann. Weiterhin ist eine Verbindungsschraube erforderlich, die in die Schnellverschlusshülse eingeschraubt werden muss. Damit ist der Deckel-Gehäuse-Schnellverschluss zumindest bei der Erstmontage der Verbindungsmittel aufwändig ausgeführt, und der Deckel-Gehäuse-Schnellverschluss ist daher nur dann von Vorteil, wenn der Gehäuseoberteil über der Gebrauchsdauer des Gehäuses häufig vom Gehäusegrundkörper entnommen werden muss.

Aus der DE 88 06 796 U1 ist ein weiterer Verschluss für ein Gehäuse mit einem Gehäuseoberteil und einem Gehäuseunterteil bekannt. In den Ecken des Gehäuses sind Verbindungsmittel vorgesehen, die aus einem Schließstück und einem Verschlussbolzen bestehen. Weiterhin ist die Anordnung einer Druckfeder am Verschlussbolzen notwendig, und am Verschlussbolzen angeformte Ansätze können in Einführkurven eingeführt werden, die im Schließstück eingebracht sind. Zur Befestigung der Verbindungsmittel im Gehäusegrundkörper sind ferner Querstifte erforderlich, sodass sich durch die Ausgestaltung des Verschlusses ebenfalls ein komplexer Aufbau ergibt.

Die DE 40 33 109 C2 zeigt schließlich ein weiteres Gehäuse mit Verschlusselementen zur Verbindung eines Gehäuseoberteils mit einem Gehäusegrundkörper, und es sind ebenfalls Verschlusshülsen notwendig, die mit Kopfbolzen in Verbindung gebracht werden müssen, sodass erst durch den mehrteiligen Aufbau der Verbindungsmittel eine Verbindung zwischen dem Gehäuseoberteil und dem Gehäusegrundkörper gebildet ist.

Aus dem Dokument "Iridium Extreme User Manual" vom 6. November 2011, aufgerufen am 02. Dezember 2016 unter der URL: http://satellitephonerepair.com/manuals/iridium/extrememanual.pdf, und dem Filmdokument "Installing the battery on Iridium Extreme" vom 9. September 2011, aufgerufen am 02. Dezember 2016 unter der URL: https://www.youtube.com/watch?v=FDz-BPc4_Eg, ist ein Satellitentelefon umfassend ein Telefongehäuse und ein Batteriefachdeckel bekannt, wobei der Batteriefachdeckel mittels eines um 90° drehbaren D-Rings am Telefongehäuse lösbar befestigt ist. Telefongehäuse und Batteriefachdeckel bilden einen Aufnahmeraum für eine Batterie.

### OFFENBARUNG DER ERFINDUNG

Es ist die Aufgabe der vorliegenden Erfindung, ein Signalgerät mit vereinfachten Verbindungsmitteln zwischen einem Gehäuseoberteil und einem Gehäusegrundkörper zu schaffen, die einfach ausgebildet, einfach angeordnet und einfach bedient werden können.

Diese Aufgabe wird von einem Signalgerät zur Aussendung eines akustischen und/oder visuellen Signals mit den Merkmalen des Anspruches 1 gelöst.

Die Erfindung schließt die technische Lehre ein, dass die Verbindungsmittel einen oder mehrere Verriegelungsstifte umfassen, die am Gehäuseoberteil haltend anordbar sind, wobei die Verriegelungsstifte einen Schaft aufweisen, der in eine jeweils zugeordnete Öffnung im Gehäusegrundkörper einführbar ist und an dem zumindest eine Riegelnase angeordnet ist, wobei die Verriegelungsstifte durch eine Verdrehung um einen Teilwinkel eines Vollkreises mit der Riegelnase im Gehäusegrundkörper verriegelbar ist. Ferner schließt die Erfindung die technische Lehre ein, dass ein Schwenkbereich für den mindestens einen Verriegelungsstift durch zumindest einen Anschlag derart begrenzt ist, dass der Verriegelungsstift zwischen einer Entriegelungsstellung und einer Verriegelungsstellung verdreht werden kann, wobei in einen Kopf des Verriegelungsstiftes eine Werkzeugaufnahme eingebracht ist, sodass durch das Einsetzen eines Werkzeugs in die Werkzeugaufnahme eine Drehung in den Verriegelungsstift einbringbar ist

Die Erfindung betrifft ein Verbindungsmittel und die Anordnung eines Verbindungsmittels in einem Signalgerät, und das Verbindungsmittel kann als einteiliger Verriegelungsstift ausgebildet werden und beispielsweise kann das Signalgerät vier Verriegelungsstifte aufweisen, die in jeweiligen Gehäuseecken angeordnet sind und mit denen der Gehäuseoberteil mit dem Gehäusegrundkörper verbunden wird. Vorteilhaft werden die Verbindungsmittel ausschließlich durch die Verriegelungsstifte gebildet, d.h., es sind zur Herstellung einer Verbindung keine weiteren Bauteile, wie Verbindungshülsen, Schrauben, etc., notwendig.

Die Verriegelungsstifte sind im Gehäuseoberteil haltend angeordnet, und die Verriegelungsstifte besitzen einen Schaft, der sich in Richtung zum Gehäusegrundkörper erstreckt. Die Verriegelungsstifte können über ihren Schaft in eine Öffnung im Gehäusegrundkörper eingeführt werden, ohne dass hierfür eine Schraubbewegung mit einer Vielzahl von Umdrehungen notwendig ist. Die Verriegelungsstifte sind dabei so im Gehäuseoberteil gehalten, dass diese um die Schaftachse gedreht werden können, wobei zugleich die Verriegelungsstifte in Schaftlängsrichtung mit einer Zugkraft bis zu einer vorgegebenen Höhe belastet werden können, ohne dass sich die Verriegelungsstifte aus ihrer haltenden Anordnung im Gehäuseoberteil lösen. Sind die Verriegelungsstifte in die zugeordneten Öffnungen im Gehäusegrundkörper eingeführt, und werden die Verriegelungsstifte um die Längsachse ihres Schaftes verdreht, so wird eine formschlüssige Verbindung der Riegelnase mit dem Gehäusegrundkörper geschaffen. Im Ergebnis entsteht eine mechanisch belastbare Verbindung zwischen dem Gehäuseoberteil und dem Gehäusegrundkörper. Zur Herstellung der formschlüssigen Verbindung zwischen der Riegelnase am Schaft des Verbindungsstiftes und dem Gehäusegrundkörper ist lediglich eine Verdrehung notwendig, die weniger als 360° beträgt.

Mit besonderem Vorteil kann der Verbindungsstift einen Kopf aufweisen, der in einer Kopfaufnahme im Gehäuseoberteil aufgenommen ist und an dem sich der Schaft anschließt, wobei in der Kopfaufnahme eine Öffnung eingebracht ist, durch die sich der Schaft des Verriegelungsstiftes hindurch erstreckt, wobei bevorzugt die Riegelnase bzw. die Riegelnasen die Öffnung im Gehäusegrundkörper formschlüssig hintergreifen. Die Öffnung im Gehäuseoberteil und die Öffnung im Gehäusegrundkörper können einander überdeckend angeordnet sein, wenn das Gehäuseoberteil am Gehäusegrundkörper angeordnet ist. Somit kann der Verriegelungsstift durch die jeweilige Öffnung im Gehäuseoberteil und Gehäusegrundkörper hindurchgeführt werden, um anschließend die Verdrehung des Verriegelungsstiftes auszuführen. Die Öffnungen können eine Kontur aufweisen, die der Kontur des Schaftes und der wenigstens einen Riegelnase entspricht, sodass der Schaft mit der Riegelnase durch die Öffnungen hindurchgeführt werden kann. Wird der Verriegelungsstift verdreht, so hintergreift die Riegelnase die Öffnung, sodass eine Formschlussverbindung zwischen dem Verriegelungsstift und dem Gehäusegrundkörper hergestellt werden kann.

Mit weiterem Vorteil kann der Kopf einen seitlichen Anschlagvorsprung aufweisen und die Kopfaufnahme kann einen Schwenkbereich umfassen, in dem der Anschlagvorsprung bei Verdrehen des Verriegelungsstiftes schwenken kann, wobei der Schwenkbereich durch zumindest einen Anschlag in der Kopfaufnahme begrenzt ist. Insbesondere ist der Schwenkbereich zwischen zwei Anschlägen definiert, die in der Kopfaufnahme ausgebildet sind. Der Anschlagvorsprung ragt dabei in den Schwenkbereich hinein, sodass der Verriegelungsstift lediglich zwischen den Anschlägen verdreht werden kann. Insbesondere kann der Schwenkbereich durch die Anschläge derart begrenzt sein, dass der Verriegelungsstift zwischen einer Entriegelungsstellung und einer Verriegelungsstellung verdreht werden kann, wobei der Schwenkbereich mit den Anschlägen insbesondere derart ausgebildet ist, dass der Verriegelungsstift über einen Winkelbereich von 90° bis 180°, bevorzugt über einen Winkelbereich von 120° bis 150°, besonders bevorzugt über einen Winkel von etwa 135° verdrehbar ist. Eine Verdrehbarkeit von 135° entspricht dabei einer der 3/8-Verriegelung, die eine Person manuell ausführen kann, ohne ein Werkzeug im Verriegelungsstift umzusetzen, da eine 3/8-Drehung aus dem Handgelenk ausgeführt werden kann.

Zum Ansetzen eines Werkzeugs an den Verriegelungsstift ist im Kopf des Verriegelungsstift eine Werkzeugaufnahme eingebracht, insbesondere eine Aufnahme für einen Schlitzschraubendreher oder einen Inbusschlüssel und bevorzugt eine Aufnahme für einen Kreuzschlitzschraubendreher, sodass durch ein Einsetzen eines Werkzeugs in die Werkzeugaufnahme eine Drehung in den Verriegelungsstift einbringbar ist. Durch die Verdrehung des Verriegelungsstiftes zwischen der Entriegelungsstellung und der Verriegelungsstellung kann beispielsweise in der Entriegelungsstellung das Kreuz der Werkzeugaufnahme für einen Kreuzschlitzschraubendreher ein "+"-Zeichen bilden, und in der Verriegelungsstellung kann das Kreuz ein "x" bilden. Bei Betrachtung der Köpfe der Verriegelungsstifte, die in den Kopfaufnahmen im Gehäuseoberteil eingebracht sind, kann ein Monteur mit einem Blick erkennen, ob sich die Verriegelungsstifte in einer Verriegelungsstellung oder in einer Entriegelungsstellung befinden.

Der Schaft des Verriegelungsstiftes kann einen Kragen aufweisen, und wenn der Schaft durch die Öffnung in der Kopfaufnahme des Gehäuseoberteils hindurchgeführt ist, kann der Verriegelungsstift durch den Kragen verliersicher am Gehäuseoberteil gehalten werden. Dabei befindet sich die Öffnung der Kopfaufnahme zwischen dem Kragen und dem Kopf des Verriegelungsstiftes, sodass auch dann, wenn der Verriegelungsstift nicht formschlüssig im Gehäusegrundkörper verankert ist, dieser verliersicher am Gehäuseoberteil gehalten ist. Der Kragen kann dabei so ausgestaltet sein, dass der Verriegelungsstift mit einer zu überwindenden Montagekraft mit dem Kragen durch die Öffnung hindurch gedrückt werden muss, ohne dass an der Öffnung oder am Kragen bleibende Verformungen entstehen.

Nach einer weiteren vorteilhaften Ausführungsform kann die Riegelnase beim Hintergreifen der Öffnung im Gehäusegrundkörper durch das Verdrehen des Verriegelungsstiftes eine Haltefläche anlaufen und überstreichen, gegen die die Riegelnase gehalten ist. Die Haltefläche kann plan oder bevorzugt mit einer Steigung ausgeführt werden, derart, dass bei einem Verdrehen des Verriegelungsstiftes dieser in die Öffnung im Gehäusegrundkörper weiter hineingezogen wird. Insbesondere können zwei Riegelnasen am Schaft des Verriegelungsstiftes angeordnet sein, und korrespondierend zu zwei Riegelnasen können zwei Halteflächen die Hinterseite der Öffnung im Gehäusegrundkörper bilden. Die Halteflächen weisen eine Form gemäß einer Helix auf, und ist der Schaft mit den Riegelnasen durch die Öffnung im Gehäusegrundkörper hindurchgeführt worden, und wird die Drehbewegung in den Verriegelungsstift eingeleitet, überstreichen die Riegelnasen die Halteflächen und laufen an diesen schräg hoch. Durch das Hochlaufen der Riegelnasen an den Halteflächen wird der Verriegelungsstift weiter in den Gehäusegrundkörper hineingezogen, wodurch eine feste Verbindung zwischen dem Gehäuseoberteil und dem Gehäusegrundkörper entsteht. Insbesondere können die Halteflächen eine Rastposition in der Verriegelungsstellung aufweisen, durch die ein selbsttätiges Rückdrehen des Verriegelungsstiftes entlang der Halteflächen verhindert wird. Die Halteflächen können dabei einteilig mit dem Gehäusegrundkörper ausgeführt sein, der beispielsweise durch ein Spritzgussverfahren hergestellt ist. Insbesondere kann der Gehäusegrundkörper hinter den Öffnungen Hohlkammern aufweisen, sodass Gehäusegrundkörper mit den Öffnungen und den Halteflächen in einem Ein-Schritt-Spritzguss hergestellt werden können.

Auch ist es vorteilhaft, dass die Öffnung in der Kopfaufnahme im Gehäuseoberteil und/oder die Öffnung im Gehäusegrundkörper eine Öffnungskontur aufweist, die mit dem Querschnitt des Schaftes und der zumindest einen Riegelnase korrespondiert, wobei vorzugsweise zwei Riegelnasen am Schaft insbesondere sich gegenüberstehend angeordnet sind. Die Öffnungen weisen daher eine Kreisform mit zwei sich gegenüberstehenden Ausbuchtungen auf, und der Verriegelungsstift muss in der Drehposition durch die Öffnungen hindurch geführt werden, in der die Riegelnasen mit den Ausbuchtungen korrespondieren.

Auch ist es vorteilhaft, wenn zwischen dem Gehäusegrundkörper und dem Gehäuseoberteil eine mit einer vorzugsweise geschlossenen Kontur ausgebildete Dichtschnur angeordnet ist. Durch das Verdrehen des Verriegelungsstiftes und das damit erreichbare Hineinziehen des Verriegelungsstiftes in die Öffnung im Gehäusegrundkörper kann die Dichtschnur zusammengedrückt werden, um eine gewünschte Dichtwirkung zwischen dem Gehäuseoberteil und dem Gehäusegrundkörper zu erzielen. Beispielsweise kann die Dichtschnur in einer Nut in zumindest einem Gehäuseteil eingesetzt oder eingespritzt sein, und durch das gegenüberliegende Gehäuseteil gequetscht werden. Insbesondere können die Verriegelungsstifte mit ihren zugehörigen Öffnungen außerhalb der geschlossenen Kontur der Dichtschnur angeordnet werden, und das Gehäuse des Signalgerätes kann beispielsweise durch die Schutzklasse IP66 nach DIN EN 60529 klassifiziert werden.

Gemäß einer weiteren das Signalgerät verbessernden Maßnahme kann eine Führungsanordnung vorgesehen sein, durch die das Gehäuseoberteil beim Fügen am Gehäusegrundkörper geführt wird. Dabei kann die Führungsanordnung wenigstens eine Führungsfeder und wenigstens eine Führungsnut umfassen, wobei durch das Fügen des Gehäuseoberteils am Gehäusegrundkörper die Führungsfeder in die zugeordnete Führungsnut eingeführt wird. Beispielsweise können am Gehäusegrundkörper vier ein Rechteck bildende Führungsfedern angeordnet sein, die in vier ebenfalls ein Rechteck bildende Führungsnuten am Gehäuseoberteil eingreifen, wenn das Gehäuseoberteil am Gehäusegrundkörper gefügt wird.

Insbesondere ist es von Vorteil, wenn die Führungsanordnung mehrere Führungsfedern und mehrere jeweils zugeordnete Führungsnuten aufweist, wobei mindestens eine Führungsfeder mit einer abweichenden Geometrie zumindest einer Führungsnut mit einer korrespondierend abweichenden Geometrie zugeordnet ist, sodass das Gehäuseoberteil nur dann am Gehäusegrundkörper angeordnet werden kann, wenn die Führungsfeder mit der abweichenden Geometrie in die Führungsnut mit der ebenfalls abweichenden Geometrie gefügt wird. Dabei kann verhindert werden, dass ein Monteur den Gehäuseoberteil in einer ungeeigneten Position am Gehäusegrundkörper montiert.

Auch kann vorgesehen sein, dass der Verriegelungsstift und/oder der Gehäusegrundkörper und/oder der Gehäuseoberteil zur Anordnung einer Plombierung ausgebildet ist, derart, dass der Gehäuseoberteil nur durch eine Manipulation der Plombierung vom Gehäusegrundkörper gelöst werden kann. Beispielsweise kann der Verriegelungsstift durch die Plombierung in der Verdrehbarkeit gehemmt sein, sodass der Verriegelungsstift nur durch eine Zerstörung der Plombierung von der Verriegelungsstellung in die Entriegelungsstellung überführt werden kann.

Das Material des Verriegelungsstiftes kann derart ausgebildet sein, dass eine Haftreibung zum Gehäuseoberteil und/oder zum Gehäusegrundkörper, insbesondere im Kontakt zur Haltefläche, entsteht, sodass ein selbsttätiges Verdrehen des Verriegelungsstiftes verhindert ist. Insbesondere ist der Verriegelungsstift aus einem einteiligen Kunststoffbauteil hergestellt. Die Haftreibung kann zwischen dem Kopf des Verriegelungsstiftes und der Auflagefläche des Kopfes in der Kopfaufnahme des Gehäuseoberteils vorherrschen, die die Öffnung in der Kopfaufnahme berandet. Insbesondere kann die Haftreibung jedoch auch zwischen den Riegelnasen und der Haltefläche vorteilhaft sein, sodass ein Losdrehen des Verriegelungsstiftes aus der Verriegelungsstellung bereits durch die Haftreibung verhindert ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen schematisch:
- Figur 1: einen Teilbereich eines Signalgerätes in einer Schnittansicht;
- Figur 2: ein Signalgerät in einer perspektivischen Ansicht;
- Figur 3: eine Ansicht eines Verriegelungsstiftes,
- Figur 4: ein Gehäuseoberteil im Bereich einer Kopfaufnahme zur Aufnahme des Kopfes eines Verriegelungsstiftes;
- Figur 5: eine Unteransicht der Öffnung im Gehäusegrundkörper;
- Figur 6: ein Ausführungsbeispiel eines Gehäuseoberteils mit Führungsnuten; und
- Figur 7: ein Ausführungsbeispiel eines Gehäusegrundkörpers mit Führungsfedern, die mit den Führungsnuten im Gehäuseoberteil eine Führungsanordnung bilden.

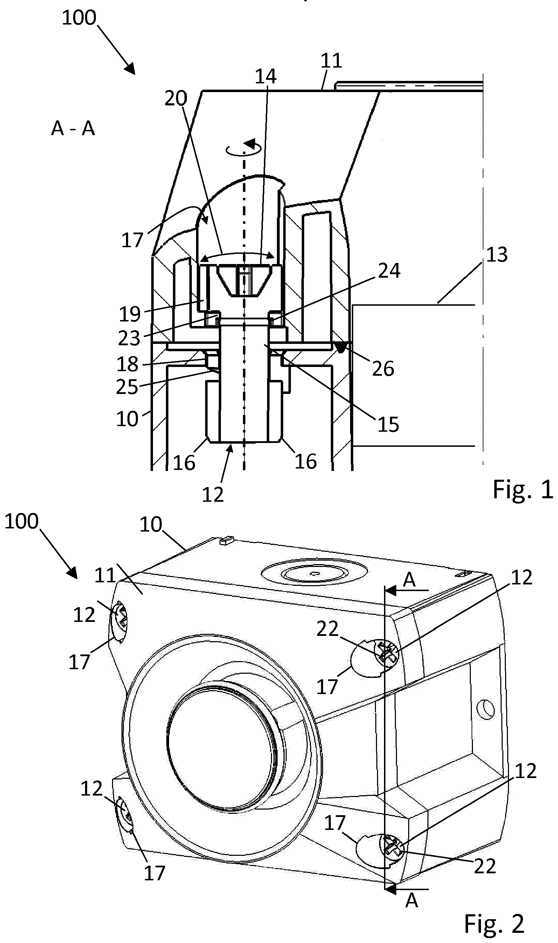

Figur 1 zeigt ein Ausführungsbeispiel eines Signalgerätes 100 in einer quergeschnittenen Ansicht entlang der Schnittfläche A - A in Figur 2. Gezeigt ist das Gehäuse des Signalgerätes 100, das einen Gehäusegrundkörper 10 umfasst, und am Gehäusegrundkörper 10 ist ein Gehäuseoberteil 11 in Gestalt eines Gehäusedeckels angeordnet. Dadurch wird innenliegend im Gehäuse ein Aufnahmeraum geschaffen, in dem eine elektrische Baugruppe 13 aufgenommen ist. Die elektrische Baugruppe 13 dient zur Signalerzeugung, und kann beispielsweise ein signalerzeugendes Mittel umfassen.

Um das Gehäuseoberteil 11 am Gehäusegrundkörper 10 zu befestigen, sind Verbindungsmittel vorgesehen, und die Verbindungsmittel sind erfindungsgemäß als Verriegelungsstifte 12 ausgeführt. Durch die Schnittansicht des Signalgerätes 100 ist ein Verriegelungsstift 12 gezeigt, und der Gehäuseoberteil 11 kann mit insgesamt vier Verriegelungsstiften 12 am Gehäusegrundkörper 10 befestigt sein, die in den jeweiligen Ecken des Signalgerätes 100 angeordnet sind.

Der Verriegelungsstift 12 weist einen Kopf 14 auf, und an den Kopf 14 schließt sich ein Schaft 15 an. Am Schaft 15 sind zwei Riegelnasen 16 angeordnet, und die Riegelnasen 16 erstrecken sich quer zur Längsachse des Schaftes 15. Der Kopf 14 des Verriegelungsstiftes 12 ist in einer Kopfaufnahme 17 im Gehäuseoberteil 11 aufgenommen, und bodenseitig weist die Kopfaufnahme 17 eine Öffnung 23 auf, durch die der Schaft 15 hindurchgeführt ist. Am Gehäusegrundkörper 10 ist eine Öffnung 18 vorgesehen, durch die sich der Schaft 15 ebenfalls erstreckt. Wird der Verriegelungsstift 12 montiert, so wird dieser durch die Öffnungen 23 und 18 hindurchgeführt, wobei die Öffnungen 23 und 18 eine Kontur aufweisen, die das Hindurchführen des Verriegelungsstiftes 12 mit dem Schaft 15 und den Riegelnasen 16 in einer vorgesehenen Drehposition um die Längsachse des Schaftes 15 des Verriegelungsstiftes 12 erlaubt. Ist der Verriegelungsstift 12 hindurchgeführt, kann dieser um seine Längsachse verdreht werden, und die Riegelnasen 16 hintergreifen die Öffnung 18, und wirken gegen eine Haltefläche 25.

Zum Hintergreifen der Öffnung 18 im Gehäusegrundkörper 10 und zur Kontaktierung der Haltefläche 25 durch die Riegelnasen 16 muss der Verriegelungsstift 12 verdreht werden, und die Drehung erfolgt zwischen einer Entriegelungsstellung und einer Verriegelungsstellung. Die Drehung wird durch einen Anschlagvorsprung 19 am Kopf 14 begrenzt, der in einen begrenzten Schwenkbereich 20 in der Kopfaufnahme 17 verschwenken kann, wenn der Verriegelungsstift 12 um seine Längsachse verdreht wird. Dabei beträgt der Schwenkwinkel des Schwenkbereiches 20 gemäß dem gezeigten Ausführungsbeispiel 135°.

Figur 2 zeigt eine perspektivische Ansicht des Signalgerätes 100 zur Aussendung eines akustischen und/oder visuellen Signals mit einem Gehäusegrundkörper 10 und einem Gehäuseoberteil 11, und zur Verbindung des Gehäuseoberteils 11 mit dem Gehäusegrundkörper 10 sind vier Verriegelungsstifte 12 gezeigt, die in zugeordneten Kopfaufnahmen 17 aufgenommen sind, die im Gehäuseoberteil 11 eingebracht sind. Die Verriegelungsstifte 12 besitzen in ihren Köpfen Werkzeugaufnahmen 22, die beispielhaft als Werkzeugaufnahmen für Kreuzschlitzschraubendreher ausgeführt sind.

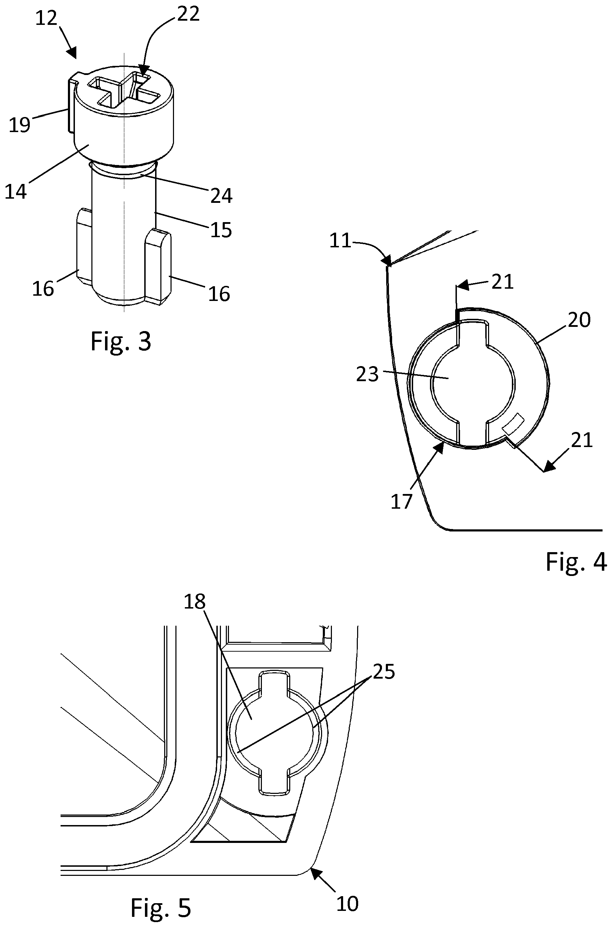

Figur 3 zeigt in einer perspektivischen Ansicht einen Verriegelungsstift 12 mit dem Kopf 14, dem Schaft 15 und zwei am Schaft 15 in gegenüberliegender Anordnung vorgesehene Riegelnasen 16. Der Verriegelungsstift 12 ist aus einem Kunststoffbauteil, beispielsweise im Spritzguss, einteilig hergestellt. Am Kopf 14 ist die Anschlagvorrichtung 19 gezeigt, die im Schwenkbereich 20 in der Kopfaufnahme 17 verschwenken kann.

Figur 4 zeigt eine Ansicht des Gehäuseoberteils 11 im Bereich einer Kopfaufnahme 17, in der der Kopf 14 des Verriegelungsstiftes 12 eingesetzt werden kann. Mittig im Bodenbereich der Kopfaufnahme 17 befindet sich die Öffnung 23 zum Hindurchführen des Schaftes 15 mit den Riegelnasen 16 des Verriegelungsstiftes 12, und es ist gezeigt, dass die Öffnung 23 eine Kontur aufweist, die dem Querschnitt des Schaftes 15 mit zwei sich gegenüberliegenden Riegelnasen 16 entspricht. Die Kopfaufnahme 17 weist einen Schwenkbereich 20 auf, der durch Anschläge 21 in der Kopfaufnahme 17 begrenzt ist. Die Anschläge 21 sind in der Körperkontur des Gehäuseoberteils 11 innenseitig in der Kopfaufnahme 17 eingebracht, und wenn der Kopf 14 des Verriegelungsstiftes 12 in der Kopfaufnahme 17 eingesetzt ist, so kann der Anschlagvorsprung 19 am Kopf 14 im Schwenkbereich 20 verschwenken. Durch die Anschläge 21 kann der maximale Verdrehbereich des Verriegelungsstiftes 12 begrenzt werden, indem der Anschlagvorsprung 19 an einen Anschlag 21 für die Entriegelungsstellung und an einen Anschlag 21 für die Verriegelungsstellung anschlagen kann. Beispielhaft ist der Öffnungswinkel der Anschläge 21, durch den der Schwenkbereich 20 definiert ist, mit einem Winkel von 135° gezeigt.

Figur 5 zeigt eine Ansicht des Gehäusegrundkörpers 10 von der Unterseite der Öffnung 18, an der sich die Halteflächen 25 befinden. Die Öffnung 18 weist ebenfalls eine Kontur auf, die dem Querschnitt des Schaftes 15 mit den Riegelnasen 16 in sich gegenüberliegender Position entspricht. Ist der Schaft 15 mit den Riegelnasen 16 durch die Öffnung 18 hindurchgeführt worden, und wird der Verriegelungsstift 12 um seine Längsachse verdreht, so können die Riegelnasen 16 mit den Halteflächen 25 in Kontakt kommen, wobei die Halteflächen 25 die Öffnung 18 beidseitig beranden, sodass bei zwei Riegelnasen 16 jeder Riegelnase 16 eine eigene Haltefläche 25 zugeordnet ist. Die Halteflächen 25 weisen eine Steigung auf, die bewirkt, dass bei einem Verdrehen des Verriegelungsstiftes 12 und bei einem Überstreichen der Halteflächen 25 durch die Riegelnasen 16 der Verriegelungsstift 12 weiter in die Öffnung 18 hineingezogen werden kann.

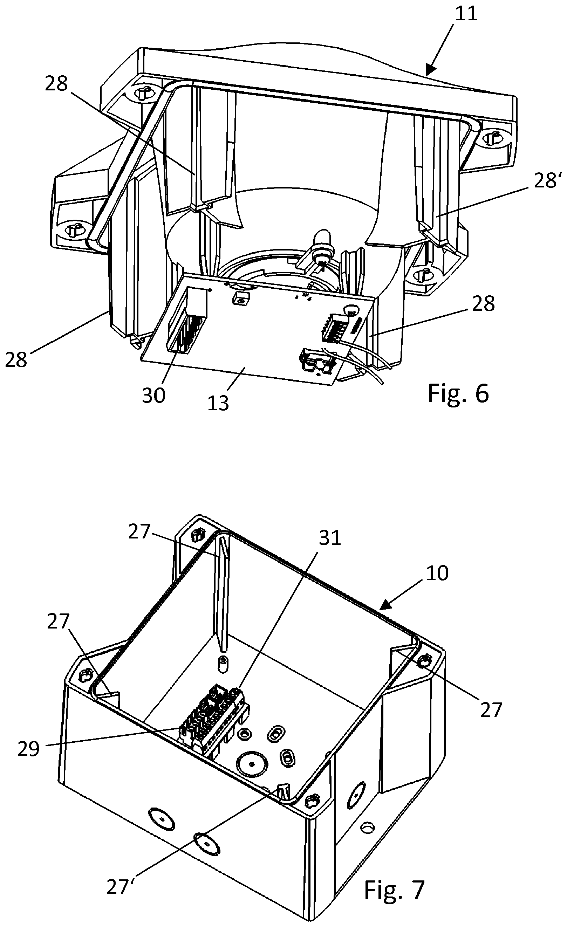

Die Figuren 6 und 7 zeigen das Gehäuseoberteil 11 und den Gehäusegrundkörper 10 in einer jeweils perspektivischen Ansicht. Am Gehäuseoberteil 11 sind Führungsnuten 28 angeordnet, die sich entlang einer Montagerichtung erstrecken, wenn das Gehäuseoberteil 11 mit dem Gehäusegrundkörper 10 zusammengesetzt wird. Am Gehäusegrundkörper 10 sind mit den Führungsnuten 28 korrespondierende Führungsfedern 27 angeordnet, die beim Fügen des Gehäuseoberteils 11 mit dem Gehäusegrundkörper 10 in die Führungsnuten 28 eingreifen. Dabei ist gezeigt, dass eine Führungsnut 28' eine abweichende Geometrie aufweist, die mit einer abweichenden Geometrie einer Führungsfeder 27' korrespondieren muss, damit das Gehäuseoberteil 11 am Gehäusegrundkörper 10 montiert werden kann. Damit wird sichergestellt, dass das Gehäuseoberteil 11 in einer richtigen Position mit dem Gehäusegrundkörper 10 montiert wird, beispielsweise wenn ein Steckkontaktpartner 29 am Gehäusegrundkörper 10 mit einem Steckkontaktpartner 30 am Gehäuseoberteil 11 gefügt werden muss, um beispielsweise eine elektrische Kontaktierung der elektrischen Baugruppe 13 mit einem Leitungsanschlussmittel 31 zu schaffen.

Die Erfindung beschränkt sich in ihrer Ausführung nicht auf das vorstehend angegebene bevorzugte Ausführungsbeispiel. Die Erfindung ist durch die Ansprüche definiert.

### Bezugszeichenliste

- 100: Signalgerät
- 10: Gehäusegrundkörper
- 11: Gehäuseoberteil
- 12: Verbindungselement, Verriegelungsstift
- 13: elektrische Baugruppe
- 14: Kopf
- 15: Schaft
- 16: Riegelnase
- 17: Kopfaufnahme
- 18: Öffnung (im Gehäusegrundkörper)
- 19: Anschlagvorsprung (am Kopf)
- 20: Schwenkbereich
- 21: Anschlag
- 22: Werkzeugaufnahme
- 23: Öffnung (im Gehäuseoberteil)
- 24: Kragen
- 25: Haltefläche
- 26: Dichtschnur
- 27: Führungsfeder
- 27': Führungsfeder mit abweichender Geometrie
- 28: Führungsnut
- 28': Führungsnut mit abweichender Geometrie
- 29: Steckkontaktpartner
- 30: Steckkontaktpartner
- 31: Leitungsanschlussmittel

## Patentansprüche

1. Signalgerät (100) zur Aussendung eines akustischen und/oder visuellen Signals, aufweisend einen Gehäusegrundkörper (10) und einen Gehäuseoberteil (11), wobei der Gehäuseoberteil (11) mittels Verbindungsmitteln mit dem Gehäusegrundkörper (10) verbindbar ist, und wobei durch den Gehäusegrundkörper (10) und den Gehäuseoberteil (11) ein Aufnahmeraum gebildet ist, in dem wenigstens eine elektrische Baugruppe (13) aufgenommen ist,
wobei die Verbindungsmittel einen oder mehrere Verriegelungsstifte (12) umfassen, die am Gehäuseoberteil (11) haltend anordbar sind, wobei die Verriegelungsstifte (12) einen Schaft (15) aufweisen, der in eine jeweils zugeordnete Öffnung (18) im Gehäusegrundkörper (10) einführbar ist und an dem zumindest eine Riegelnase (16) angeordnet ist, wobei die Verriegelungsstifte (12) durch eine Verdrehung um einen Teilwinkel eines Vollkreises mit der Riegelnase (16) im Gehäusegrundkörper (10) verriegelbar sind, **dadurch gekennzeichnet, dass**
ein Schwenkbereich (20) für den mindestens einen Verriegelungsstift (12) durch zumindest einen Anschlag (21) derart begrenzt ist, dass der Verriegelungsstift (12) zwischen einer Entriegelungsstellung und einer Verriegelungsstellung verdreht werden kann, wobei in einen Kopf (14) des Verriegelungsstiftes (12) eine Werkzeugaufnahme (22) eingebracht ist, sodass durch das Einsetzen eines Werkzeugs in die Werkzeugaufnahme (22) eine Drehung in den Verriegelungsstift (12) einbringbar ist.

2. Signalgerät nach Anspruch 1, **dadurch gekennzeichnet, dass** der Kopf (14) in einer Kopfaufnahme (17) im Gehäuseoberteil (11) aufgenommen ist und dass sich der Schaft (15) an dem Kopf (14) anschließt, wobei in der Kopfaufnahme (17) eine Öffnung (23) eingebracht ist, durch die sich der Schaft (15) des Verriegelungsstiftes (12) hindurch erstreckt, wobei bevorzugt die Riegelnase (16) die Öffnung (18) im Gehäusegrundkörper (10) formschlüssig hintergreift.

3. Signalgerät nach Anspruch 2, **dadurch gekennzeichnet, dass** der Kopf (14) einen seitlichen Anschlagvorsprung (19) aufweist, und dass die Kopfaufnahme (17) den Schwenkbereich (20) umfasst, in dem der Anschlagvorsprung (19) beim Verdrehen des Verriegelungsstiftes (12) schwenken kann, wobei der Schwenkbereich (20) durch den zumindest einen Anschlag (21) in der Kopfaufnahme (17) begrenzt ist.

4. Signalgerät nach Anspruch 3, **dadurch gekennzeichnet, dass** der Schwenkbereich (20) mit dem zumindest einen Anschlag (21) insbesondere derart ausgebildet ist, dass der Verriegelungsstift (12) über einen Winkelbereich von 90° bis 180°, bevorzugt über einen Winkelbereich von 120° bis 150°, besonders bevorzugt über einen Winkel von etwa 135° verdrehbar ist.

5. Signalgerät nach einem der vorgenannten Ansprüche, **dadurch gekennzeichnet,** die Werkzeugaufnahme (22) eine Aufnahme für einen Schlitzschraubendreher oder einen Inbusschlüssel und bevorzugt eine Aufnahme für einen Kreuzschlitzschraubendreher ist.

6. Signalgerät nach einem der Ansprüche 2 bis 5, **dadurch gekennzeichnet, dass** der Schaft (15) durch eine Öffnung (23) in der Kopfaufnahme (17) hindurchgeführt ist, wobei der Verriegelungsstift (12) einen vorzugsweise am Schaft (15) angeordneten Kragen (24) aufweist, sodass die Öffnung (23) in der Kopfaufnahme (17) zwischen dem Kopf (14) und dem Kragen (24) eingefasst ist, wodurch der Verriegelungsstift (12) verliersicher am Gehäuseoberteil (11) angeordnet ist.

7. Signalgerät nach einem der vorgenannten Ansprüche, **dadurch gekennzeichnet, dass** die Riegelnase (16) beim Hintergreifen der Öffnung (18) im Gehäusegrundkörper (10) durch ein Verdrehen des Verriegelungsstiftes (12) eine Haltefläche (25) überstreicht und gegen diese gehalten ist, welche Haltefläche (25) plan oder bevorzugt mit einer Steigung ausgeführt ist, derart, dass bei einem Verdrehen des Verriegelungsstiftes (12) dieser in die Öffnung (18) im Gehäusegrundkörper (10) weiter hineingezogen wird.

8. Signalgerät nach einem der vorgenannten Ansprüche, **dadurch gekennzeichnet, dass** die Öffnung (23) in der Kopfaufnahme (17) im Gehäuseoberteil (11) und/oder die Öffnung (18) im Gehäusegrundkörper (10) eine Öffnungskontur aufweist, die mit dem Querschnitt des Schaftes (15) und der zumindest einen Riegelnase (16) korrespondiert, wobei vorzugsweise zwei Riegelnasen (16) am Schaft (15) insbesondere sich gegenüberstehend angeordnet sind.

9. Signalgerät nach einem der vorgenannten Ansprüche, **dadurch gekennzeichnet, dass** zwischen dem Gehäusegrundkörper (10) und dem Gehäuseoberteil (11) eine mit einer vorzugsweise geschlossenen Kontur ausgebildete Dichtschnur (26) angeordnet ist, wobei durch das Verdrehen des Verriegelungsstiftes (12) und das damit erreichbare Hineinziehen des Verriegelungsstiftes (12) in die Öffnung (18) im Gehäusegrundkörper (10) die Dichtschnur (26) zusammengedrückt wird.

10. Signalgerät nach einem der vorgenannten Ansprüche, **dadurch gekennzeichnet, dass** eine Führungsanordnung vorgesehen ist, durch die das Gehäuseoberteil (11) beim Fügen am Gehäusegrundkörper (10) geführt wird.

11. Signalgerät nach Anspruch 10, **dadurch gekennzeichnet, dass** die Führungsanordnung wenigstens eine Führungsfeder (27) und wenigstens eine Führungsnut (28) umfasst, wobei durch das Fügen des Gehäuseoberteils (11) am Gehäusegrundkörper (10) die Führungsfeder (27) in die zugeordnete Führungsnut (28) eingeführt wird.

12. Signalgerät nach Anspruch 11, **dadurch gekennzeichnet, dass** die Führungsanordnung mehrere Führungsfedern (27) und mehrere jeweils zugeordnete Führungsnuten (28) aufweist, wobei zumindest eine Führungsfeder (27') mit einer abweichenden Geometrie zumindest einer Führungsnut (28') mit einer korrespondierend abweichenden Geometrie zugeordnet ist, sodass das Gehäuseoberteil (11) nur dann am Gehäusegrundkörper (10) angeordnet werden kann, wenn die Führungsfeder (27') mit der abweichenden Geometrie in die Führungsnut (28') mit der abweichenden Geometrie gefügt wird.

13. Signalgerät nach einem der vorgenannten Ansprüche, **dadurch gekennzeichnet, dass** der Verriegelungsstift (12) und/oder der Gehäusegrundkörper (10) und/oder der Gehäuseoberteil (11) zur Anordnung einer Plombierung ausgebildet ist, derart, dass der Gehäuseoberteil (11) nur durch eine Manipulation der Plombierung vom Gehäusegrundkörper (10) gelöst werden kann.

14. Signalgerät nach einem der vorgenannten Ansprüche, **dadurch gekennzeichnet, dass** das Material des Verriegelungsstiftes (12) derart ausgebildet ist, dass eine Haftreibung zum Gehäuseoberteil (11) und/oder zum Gehäusegrundkörper (10), insbesondere im Kontakt zur Haltefläche (25), entsteht, sodass ein selbsttätiges Verdrehen des Verriegelungsstiftes (12) verhindert ist, insbesondere dass der Verriegelungsstift (12) aus einem einteiligen Kunststoffbauteil hergestellt ist.

## Claims

1. Signal apparatus (100) for emitting an acoustic and/or visual signal, having a base housing body (10) and an upper housing part (11), wherein the upper housing part (11) is connectable with the base housing body (10) by means of connecting means, and wherein a receiving area is formed by the base housing body (10) and the upper housing part (11), in which at least one electrical assembly (13) is received,
wherein
the connecting means comprise one or several locking pins (12) which can be arranged retentively at the upper housing part (11), wherein the locking pins (12) have a shaft (15) which can be inserted into a respective associated opening (18) in the base housing body (10) and at which at least one locking lug (16) is arranged, wherein the locking pins (12) can be locked with the locking lug (16) in the base housing body (10) by a rotation about a partial angle of a full circle, **characterized in that**
a pivot area (20) for the at least one locking pin (12) is limited by at least one stop (21) in such a way that the locking pin (12) can be rotated between an unlocked position and a locked position, wherein a tool receiving means (22) is introduced into a head (14) of the locking pin (12), so that by inserting a tool into the tool receiving means (22) a rotation can be introduced into the locking pin (12).

2. Signal apparatus according to claim 1, **characterized in that** the head (14) is received in a head receiving means (17) in the upper housing part (11) and **in that** the shaft (15) adjoins the head (14), wherein in the head receiving means (17) an opening (23) is introduced, through which the shaft (15) of the locking pin (12) extends, wherein preferably the locking lug (16) engages behind the opening (18) in the base housing body (10) in a form-fitting manner.

3. Signal apparatus according to claim 2, **characterized in that** the head (14) has a lateral stop projection (19), and **in that** the head receiving means (17) comprises the pivot area (20) in which the stop projection (19) can pivot upon rotation of the locking pin (12), wherein the pivot area (20) is limited by the at least one stop (21) in the head receiving means (17).

4. Signal apparatus according to claim 3, **characterized in that** the pivot area (20) with the at least one stop (21) is in particular configured in such a way that the locking pin (12) can be rotated over an angular range of 90° to 180°, preferably over an angular range of 120° to 150°, more preferably over an angle of about 135°.

5. Signal apparatus according to one of the preceding claims, **characterized in that** the tool receiving means (22) is a receiving means for a flat-headed screwdriver or an Allen key and preferably is a receiving means for a Phillips screwdriver.

6. Signal apparatus according to one of claims 2 to 5, **characterized in that** the shaft (15) is guided through an opening (23) in the head receiving means (17), wherein the locking pin (12) has a collar (24) arranged preferably at the shaft (15), so that the opening (23) in the head receiving means (17) is bordered between the head (14) and the collar (24), whereby the locking pin (12) is arranged captive at the upper housing part (11).

7. Signal apparatus according to one of the preceding claims, **characterized in that** the locking lug (16) brushes over a holding surface (25) and is held against this when engaging behind the opening (18) in the base housing body (10) by a rotation of the locking pin (12), said holding surface (25) being configured plan or preferably with an incline in such a way that upon rotation of the locking pin (12) the latter is further drawn into the opening (18) in the base housing body (10).

8. Signal apparatus according to one of the preceding claims, **characterized in that** the opening (23) in the head receiving means (17) in the upper housing part (11) and/or the opening (18) in the base housing body (10) has an opening contour which corresponds to the cross section of the shaft (15) and the at least one locking lug (16), wherein preferably two locking lugs (16) are arranged at the shaft (15) in particular facing each other.

9. Signal apparatus according to one of the preceding claims, **characterized in that** between the base housing body (10) and the upper housing part (11) a rope seal (26) is arranged which is formed with a preferably closed contour, wherein by means of the rotation of the locking pin (12) and of the thus achievable pulling of the locking pin (12) into the opening (18) in the base housing body (10), the rope seal (26) is compressed.

10. Signal apparatus according to one of the preceding claims, **characterized in that** a guide arrangement is provided, through which the upper housing part (11) is guided during the joining at the base housing body (10).

11. Signal apparatus according to claim 10, **characterized in that** the guide arrangement comprises at least one guide spring (27) and at least one guide groove (28), wherein by the joining of the upper housing part (11) at the base housing body (10), the guide spring (27) is introduced into the associated guide groove (28).

12. Signal apparatus according to claim 11, **characterized in that** the guide arrangement has a plurality of guide springs (27) and a plurality of respective associated guide grooves (28), wherein at least one guide spring (27') with a different geometry is assigned to at least one guide groove (28') with a correspondingly different geometry, so that the upper housing part (11) can only be arranged at the base housing body (10) if the guide spring (27') with the different geometry is joined into the guide groove (28') with the different geometry.

13. Signal apparatus according to one of the preceding claims, **characterized in that** the locking pin (12) and/or the base housing body (10) and/or the upper housing part (11) is designed for the arrangement of a seal, such that the upper housing part (11) can be loosened from the base housing body (10) only by a manipulation of the seal.

14. Signal apparatus according to one of the preceding claims, **characterized in that** the material of the locking pin (12) is configured in such a way that a static friction occurs towards the upper housing part (11) and/or the base housing body (10), in particular in contact with the holding surface (25), so that an automatic rotation of the locking pin (12) is prevented, in particular that the locking pin (12) is made of a one-piece plastic component.

## Revendications

1. Appareil de signalisation (100) pour émettre un signal acoustique et/ou visuel, comportant un corps de base de boîtier (10) et une partie supérieure de boîtier (11), la partie supérieure de boîtier (11) pouvant être reliée au corps de base de boîtier (10) par le biais de moyens de liaison et un espace de logement étant formé par le corps de base de boîtier (10) et la partie supérieure de boîtier (11) dans lequel est logé au moins un module électrique (13),
les moyens de liaison comprenant une ou plusieurs broches de verrouillage (12), qui peuvent être disposées en maintien sur la partie supérieure de boîtier (11), les broches de verrouillage (12) comportant une tige (15), qui peut être introduite dans une ouverture (18) respectivement attribuée dans le corps de base de boîtier (10) et sur laquelle est disposé au moins un ergot de verrouillage (16), les broches de verrouillage (12) pouvant être verrouillées par une rotation d'un pas angulaire d'un cercle entier avec l'ergot de verrouillage (16) dans le corps de base de boîtier (10), **caractérisé en ce**
**qu'**une zone de pivotement (20) pour l'au moins une broche de verrouillage (12) est limitée par au moins une butée (21) de telle sorte que la broche de verrouillage (12) peut être tournée entre une position de déverrouillage et une position de verrouillage, un logement d'outil (22) étant agencé dans une tête (14) de la broche de verrouillage (12) de telle façon qu'une rotation peut être mise en oeuvre dans la broche de verrouillage (12) par insertion d'un outil dans le logement d'outil (22).

2. Appareil de signalisation selon la revendication 1, **caractérisé en ce que** la tête (14) est logée dans un logement de tête (17) dans la partie supérieure de boîtier (11) et **en ce que** la tige (15) se raccorde à la tête (14), une ouverture (23) étant agencée dans le logement de tête (17) à travers laquelle la tige (15) de la broche de verrouillage (12) s'étend, de préférence l'ergot de verrouillage (16) venant en prise par l'arrière par conformité de forme dans l'ouverture (18) dans le corps de base de boîtier (10).

3. Appareil de signalisation selon la revendication 2, **caractérisé en ce que** la tête (14) comporte une saillie de butée (19) latérale et **en ce que** le logement de tête (17) comprend la zone de pivotement (20) dans laquelle la saillie de butée (19) peut pivoter lors de la rotation de la broche de verrouillage (12), la zone de pivotement (20) étant limitée dans le logement de tête (17) par l'au moins une butée (21).

4. Appareil de signalisation selon la revendication 3, **caractérisé en ce que** la zone de pivotement (20) est constituée avec l'au moins une butée (21), notamment de telle sorte que la broche de verrouillage (12) peut être tournée sur une plage d'angles de 90° à 180°, de préférence sur une plage d'angles de 120° à 150°, de façon particulièrement préférée sur un angle d'environ 135°.

5. Appareil de signalisation selon l'une quelconque des revendications précédentes, **caractérisé en ce que** le logement d'outil (22) est un logement pour un tournevis pour vis à tête fendue ou une clef à six pans et de préférence un logement pour un tournevis cruciforme.

6. Appareil de signalisation selon l'une quelconque des revendications 2 à 5, **caractérisé en ce que** la tige (15) est passée à travers une ouverture (23) dans le logement de tête (17), la broche de verrouillage (12) comportant une collerette (24) disposée de préférence sur la tige (15) de telle sorte que l'ouverture (23) est comprise dans le logement de tête (17) entre la tête (14) et la collerette (24), la broche de verrouillage (12) étant de ce fait disposée imperdable sur la partie supérieure de boîtier (11).

7. Appareil de signalisation selon l'une quelconque des revendications précédentes, **caractérisé en ce que** l'ergot de verrouillage (16) recouvre une surface de retenue (25) en engageant par l'arrière l'ouverture (18) dans le corps de base de boîtier (10) par une rotation de la broche de verrouillage (12) et est maintenu contre celle-ci, laquelle surface de retenue (25) est exécutée plane ou de préférence avec un pas de telle sorte que lors d'une rotation de la broche de verrouillage (12), celle-ci est tirée plus à l'intérieur dans l'ouverture (18) dans le corps de base de boîtier (10).

8. Appareil de signalisation selon l'une quelconque des revendications précédentes, **caractérisé en ce que** l'ouverture (23) dans le logement de tête (17) dans la partie supérieure de boîtier (11) et/ou l'ouverture (18) dans le corps de base de boîtier (10) comporte un profil d'ouverture qui correspond à la section de la tige (15) et à l'au moins un ergot de verrouillage (16), de préférence deux ergots de verrouillage (16) étant disposés notamment se faisant face sur la tige (15).

9. Appareil de signalisation selon l'une quelconque des revendications précédentes, **caractérisé en ce qu'**un cordon d'étanchéité (26) constitué avec un profil de préférence fermé est disposé entre le corps de base de boîtier (10) et la partie supérieure de boîtier (11), le cordon d'étanchéité (26) étant comprimé dans le corps de base de boîtier (10) par la rotation de la broche de verrouillage (12) et la rentrée réalisable de la broche de verrouillage (12) dans l'ouverture (18).

10. Appareil de signalisation selon l'une quelconque des revendications précédentes, **caractérisé en ce qu'**un système de guidage est prévu au moyen duquel la partie supérieure de boîtier (11) est guidée lors de l'assemblage sur le corps de base de boîtier (10).

11. Appareil de signalisation selon la revendication 10, **caractérisé en ce que** le système de guidage comprend au moins un ressort de guidage (27) et au moins une rainure de guidage (28), le ressort de guidage (27) étant introduit dans la rainure de guidage attribuée (28) par assemblage de la partie supérieure de boîtier (11) sur le corps de base de boîtier (10).

12. Appareil de signalisation selon la revendication 11, **caractérisé en ce que** le système de guidage comporte plusieurs ressorts de guidage (27) et plusieurs rainures de guidage (28) respectivement attribuées, au moins un ressort de guidage (27') avec une géométrie divergente étant au moins attribué à une rainure de guidage (28') avec une géométrie divergente de façon correspondante de telle sorte que la partie supérieure de boîtier (11) ne peut être disposée ensuite sur le corps de base de boîtier (10) que lorsque le ressort de guidage (27') avec la géométrie divergente est assemblé dans la rainure de guidage (28') avec la géométrie divergente.

13. Appareil de signalisation selon l'une quelconque des revendications précédentes, **caractérisé en ce que** la broche de verrouillage (12) et/ou le corps de base de boîtier (10) et/ou la partie supérieure de boîtier (11) est constitué pour disposer un plombage de telle sorte que la partie supérieure de boîtier (11) ne peut être détachée que par une manipulation du plombage du corps de base de boîtier (10).

14. Appareil de signalisation selon l'une quelconque des revendications précédentes, **caractérisé en ce que** le matériau de la broche de verrouillage (12) est constitué de telle sorte qu'il se produit un frottement d'adhérence avec la partie supérieure de boîtier (11) et/ou le corps de base de boîtier (10), notamment dans le contact avec la surface de retenue (25), de telle sorte qu'une rotation automatique de la broche de verrouillage (12) est évitée, notamment **en ce que** la broche de verrouillage (12) est fabriquée dans un composant de matière plastique monobloc.
